Europäisches Patentamt

European Patent Office

Office européen des brevets

(19)

(11) EP 0 833 134 A2

(12) EUROPEAN PATENT APPLICATION

(43) Date of publication:
01.04.1998 Bulletin 1998/14

(51) Int Cl.⁶: G01F 23/284, G01F 23/28

(21) Application number: 97121986.0

(22) Date of filing: 19.10.1994

(84) Designated Contracting States:
DE GB SE

(30) Priority: 19.10.1993 JP 283832/93
06.06.1994 JP 145786/94
14.06.1994 JP 154307/94

(62) Document number(s) of the earlier application(s) in accordance with Art. 76 EPC:
94930338.2 / 0 684 460

(71) Applicants:
• WIRE AUTOMATIC DEVICE CO., LTD.
  Amagasaki-shi, Hyogo 660 (JP)
• MUSASINO CO., LTD.
  Tokyo 145 (JP)

(72) Inventors:
• Iida, Yukio
  Suita-shi, Osaka 564 (JP)
• Kayano, Hayae
  Amagasaki-shi, Hyogo 660 (JP)

(74) Representative: Grünecker, Kinkeldey,
Stockmair & Schwanhäusser Anwaltssozietät
Maximilianstrasse 58
80538 München (DE)

Remarks:
This application was filed on 12 - 12 - 1997 as a divisional application to the application mentioned under INID code 62.

(54) Level gauge

(57) A level gauge (10) comprising: a microwave transmitter (11); a microwave receiver (12); and a guide member (15) having an introducing hole (23) for introducing a body to be detected or having a guide body (219) composed of dielectric material, one end of the guide member being connected with a microwave transmitter (11), the other end being connected with a microwave receiver (12), microwaves (M) sent out from the microwave transmitter (11) being guided by the guide member (15) to the microwave receiver (12), wherein the guide member (15) is attached to a container (1) being protruded inside the container (1). The body to be detected gets into the guide member (15) from the introducing hole (23) of the guide member (15) and intercepts the transmission of microwaves (M). The microwave receiver (12) detects this interruption of microwaves. Therefore, it is determined that the body to be detected has reached a predetermined level. Besides, when the body to be detected comes into contact with the guide body (219), an amount of transmission of microwaves (M) transmitted in the guide body (219) is changed. When an amount of change in the transmission of microwaves (M) is detected, a storage level of the body to be detected is determined.

FIG. 9

## Description

The present invention relates to a level gauge used for detecting a storage volume of liquid or granules stored in a storage container.

In general, in a storage container for storing various types of liquid or granules, there is provided a level gauge for detecting a storage volume of the liquid or granules. For example, in the case of liquid, a container for storing liquid is provided with a level gauge for detecting a storage volume of the liquid.

Concerning the level gauge used for the purpose of detecting the storage volume of liquid, the most typical one is a float type level gauge which detects a level of liquid by the position of a float or buoyancy given to the float. However, in this float type level gauge, the float comes into contact with liquid. Therefore, measurement values tend to be affected by the fluctuation of specific gravity, viscosity of liquid and the swaying motion of a container. When a dangerous substance such as petroleum and LPG is stored in the container, since the float is a movable member, static electricity is generated in accordance with the perpendicular motion of the float. Accordingly, there is a possibility that the stored liquid in the container will be ignited, and fire or explosion caused.

Also, a capacitance type level gauge is commonly used. A liquid level is detected by this capacitance type level gauge under the following principle. A measurement electrode and an earth electrode are arranged in a container being opposed to each other while a minute clearance is formed between the two. When a substance to be detected is introduced between the two electrodes, the capacitance between the two electrodes is changed. When a predetermined amount of the change is detected, it is possible to detect the liquid level.

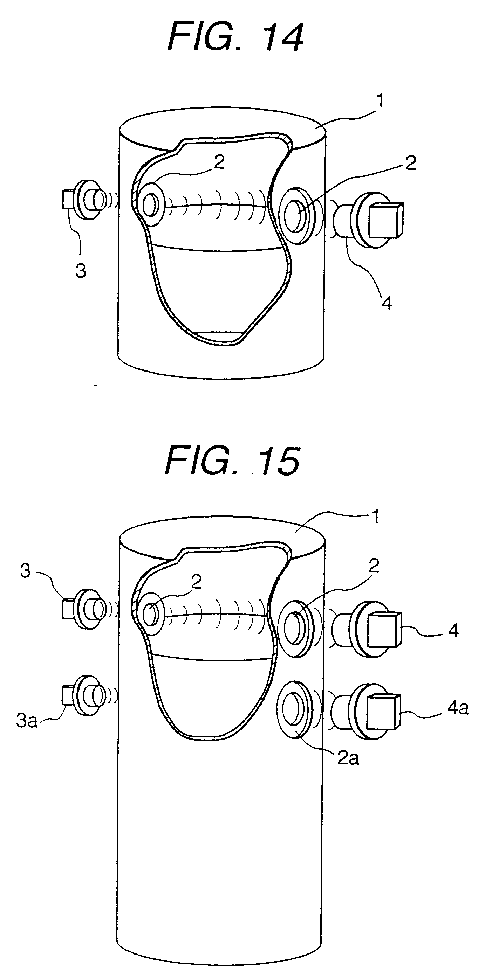

As a non-contact type level gauge, the level gauge shown in Fig. 14 is used, in which a wave transmitter 3 for generating a measurement medium such as nuclear radiation, ultrasonic waves, laser beams or microwaves and a wave receiver 4 for receiving the medium are attached onto the outside of detection windows 2 provided on the side wall of the container 1 while the detection windows are opposed to each other.

The liquid level is detected by using the property of the measuring medium in which the measurement medium is absorbed by liquid. When the liquid level reaches a position of the detection windows 2, the measurement medium transmitted by the transmitter 3 is absorbed by the liquid, so that the transmission from the transmitter 4 is intercepted. Therefore, when the receiver 4 is composed in such a manner that an interruption signal is outputted in accordance with the interruption of detection of the microwaves, it is possible to detect the liquid level.

When microwaves are used as the measurement medium, it is possible to detect the liquid level even if the detection windows are stained, because the microwaves are transmitted through a substance except for liquid, such as plastics, ceramics and paper.

For example, when liquid is stored in a container 1 wherein a number of storage volumes, for example, two storage volumes are set, as illustrated in Fig. 15, two sets of detection windows 2, 2a are provided being opposed to each other, one set of the detection windows is located at an upper position and the other set of detection windows is located at a lower position, corresponding to the two storage volumes, and two transmitters 3, 3a and two receivers 4, 4a are provided in accordance with the detection windows.

However, the capacitance type level gauge described above depends on the principle in which a change in the capacitance between the electrodes is detected to measure the liquid level. Accordingly, when a dielectric constant of the substance to be detected is low, the change in the capacitance corresponding to the existence of the substance to be detected is not appreciable, so that the detection can not be effected in some cases. Further, when dirt is deposited on the electrode surface, the measured values are greatly affected, which can not be neglected.

Further, in the capacitance type level gauge, the amplifier and electrodes are connected through wires. Accordingly, when a high voltage is applied to the electrodes due to breakdown of the amplifier or occurrence of a surge voltage, a spark discharge is caused. Especially when the substance to be detected is a combustible, there is a danger of fire and explosion, and it is difficult to effect the detection in safety.

Further, it is necessary to connect the wires to the electrodes, and it takes time and labor to attach the wires to the electrodes, and the maintenance is troublesome. Furthermore, it is necessary to adjust the measurement sensitivity for each substance to be detected. Also, the capacitance delicately changes in accordance with the length of the wire and the installation condition. Therefore, it is indispensable to finely adjust the amplifier in each installation site.

On the other hand, in the level gauge in which the wave transmitter 3 and wave receiver 4 are opposed to each other, the length from the wave transmitter 3 to the wave receiver 4 is extended in the case of a large container. As a result, it is necessary to increase an output of the wave transmitter 3. Also, it is necessary to increase areas of the wave transmitting and wave receiving sections including the detection window 2, which results in a decrease in the detection accuracy. When a number of storage volumes are set, it is necessary to provide a number of pairs of detection windows 2 (2a), microwave transmitters 3 (a) and microwave receivers 4 (4a). Accordingly, the number of parts is increased, and consumption of electric power is also increased. Consequently, not only the equipment cost but also the operation cost is raised.

Further, the higher the dielectric constant of a substance to be detected is, the more microwaves are absorbed by the substance. Therefore, it is impossible to positively and precisely detect various types of oil, the dielectric constants of which are low. Also, when a substance to be detected is granules, the dielectric constant is much lower than that of a solid body. Accordingly, it is impossible to positively and precisely detect granules for the same reason.

Other than these problems of detection, there is a problem of mechanical strength since the detection windows 2 are usually made of resin, so that the mechanical strength is not sufficiently high when LPG (liquefied petroleum gas) or LNG (liquefied natural gas) is stored in a container at high pressure. In the same manner, when the stored liquid is inflammable or explosive like petroleum, LPG, LNG, alcohol and oil, each of container 1, microwave transmitter 3 and microwave receiver 4 must be formed into an explosion-proof construction, and it is also necessary that they do not affect each other. However, in the above construction, the container 1 and the microwave transmitter 3 are connected through the detection window 2, and also the container 1 and the microwave receiver 4 are connected through the detection window 2. Accordingly, it is impossible to provide a sufficiently high explosion-proof construction.

Further, it is necessary to arrange one set or a number of sets of microwave transmitters 3 and microwave receivers 4 on the side wall being opposed to each other. Therefore, it is necessary to attach or detach these units in the process of maintenance, which takes time and labor.

Further, concerning the attaching position, these units are necessarily attached onto the side wall of the container 1, so that the degree of freedom is low when the apparatus is designed.

As described above, various problems may be encountered in the float type level gauge, the capacitance type level gauge, and the level gauge in which the wavetransmitter 3 and wave receiver 4 are arranged being opposed to each other.

An object of the present invention is to solve the above problems. That is, it is an object of the present invention to provide a level gauge characterized in that: irrespective of the value of a dielectric constant, even when the substance to be detected is granules, a storage level of the substance is positively and accurately detected; it is not necessary to use a wavetransmitter of high output so that the areas of the transmitting and receiving sections are small; and further the detecting operation can be carried out safely and the working efficiency is high.

The object achieved with a level gauge having the features of claim 1. Preferred embodiments are the subject matter of the appended subclaims.

The level gauge of the present invention is characterized in that microwaves emitted from a microwave transmitter are positively guided to a microwave receiver through a guide member. The guide member may be composed in the followingvarious ways.

Secondly, when the guide member is composed of a dielectric substance, an amount of transmission of microwaves in the guide member changes due to a difference between the dielectric constant of air and that of a body to be detected. This phenomenon is utilized. The diameter of the guide member is determined to be smaller than the diameter in which microwaves can be transmitted in the air. Under the above circumstances, it is utilized that the transmitting conditions of microwaves are different when the body to be detected exists or does not exist in the wave guide. Due to the foregoing, irrespective of the dielectric constant of the body to be detected, it is possible to detect a storage level of liquid. The present invention can be applied to not only the detection of a storage level of liquid but also the detection of a storage level of granules. Unlike the capacitance type level gauge in which fine adjustment of sensitivity is required, the level gauge of the invention can positively detect a storage level without effecting fine adjustment.

In this case, when the sectional area of a portion of the guide body is composed to be smaller than the sectional areas of other portions, or alternatively when the guide body is composed to have a portion formed into an acute angle, an S/N ratio can be improved in the case where the level of a body to be detected, the dielectric constant of which is low and close to that of air, is detected.

Both end portions of the guide body may be formed to incline downward, and the wave guide on the transmitter side and that on the receiver side are continued to the ends of the guide body, and through-holes, the diameters of which are not more than the microwave leakage diameter, are formed. Due to the foregoing, drops of water generated by dew condensation are discharged outside the guide member, so that the microwaves are prevented from being absorbed by drops of water. Further, since the inclined surface is formed on the guide body, when microwaves are incident upon the guide body, diffusion of the microwaves can be reduced, so that the attenuation of microwaves can be suppressed.

When a diameter of the curved portion of the wave guide composing the guide member is determined to be smaller than the diameter in which microwaves can be transmitted in the air, microwaves can be transmitted in the wave guide in the case where a substance, the dielectric constant of which is larger than that of air, is filled in the wave guide, and the microwaves are guided into the microwave receiver. Consequently, a storage level is detected by the reception of the microwave receiver.

Due to the foregoing structure, it becomes possible to conduct the detection of storage levels of various substances. It is possible to detect a storage level of a substance, the dielectric constant of which is small so that the storage level detection is conventionally difficult. When a diameter of the guide member in which microwaves can be transmitted is appropriately determined, it is possible to select a substance capable of being detected.

In addition to that the microwave transmitter, microwave receiver and various circuit elements may be accommodated in an enclosure, which together with the guide member is attached to the container through an attaching member. Due to the foregoing, even when parts in the enclosure are burned in a fire, flames cannot enter the container. Since ventilating holes open to the atmosphere are formed in the enclosure and the attaching member, volatile components of the stored substance are prevented from getting into the enclosure. Prevention of the volatile components from getting into the enclosure is important in the case where the storage substance is inflammable and explosive . Due to the foregoing structure, it is possible to complete an excellent explosion-proof construction.

Fig. 1 is a cross sectional view showing a primary portion of a level gauge

Fig. 2 is a perspective view showing a primary portion of a variant of the guide member of the level gauge shown in Fig. 1.

Fig. 3 is a partially sectional perspective view showing another level gauge

Fig. 4 is a cross sectional view taken on line A A in Fig. 3.

Fig. 5 is a cross sectional view taken on line B B in Fig. 3.

Fig. 6 is a schematic illustration for explaining the principle of liquid level detection of the level gauge shown in Fig. 3.

Fig. 7 is a half cross sectional view showing a guide member on the wave transmitter side of the level gauge shown in Fig. 3.

Fig. 8 is a half cross sectional view showing a guide member on the wave receiver side of the level gauge shown in Fig. 3.

Fig. 9 is a partially cutout side view showing an embodiment of the level gauge of the present invention.

Fig. 10 is a sectional view of the primary portion showing another structure of the guide member of the level gauge shown in Fig. 9.

Fig. 11 is a sectional view of the primary portion showing still another structure of the guide member of the level gauge shown in Fig. 9.

Fig. 12 is a sectional view of the primary portion showing still another structure of the guide member of the level gauge shown in Fig. 9.

Fig. 13 is a sectional view of the primary portion showing still another structure of the guide member of the level gauge shown in Fig. 9.

Fig. 14 is a partially sectional perspective view showing a conventional non-contact type level gauge in which microwaves are used.

Fig. 15 is a partially sectional perspective view showing another conventional non-contact type level gauge in which microwaves are used.

With reference to the accompanying drawings, the level gauge of the present invention will be explained in detail.

In order to simplify the explanations, liquid is taken as an example of the body to be detected.
At first an example of a level gauge, which is useful in understanding the present invention, is described.

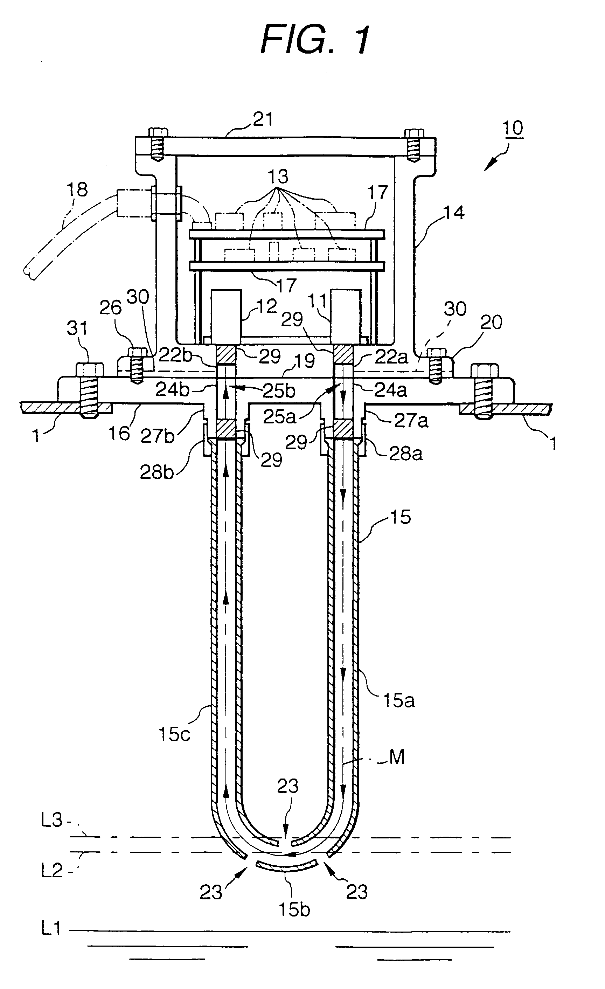

As shown in Fig. 1, the level meter 10 includes: an enclosure 14 accommodating a microwave transmitter 11, microwave receiver 12 and various circuit components 13; a guide member 15 for guiding microwaves; and an attaching member 16 through which the enclosure 14 and the guide member 15 are connected with each other and attached to a storage container 1.

The microwave transmitter 11 is a unit for generating microwaves. For example, a microwave oscillator of the prior design such as GUNN diode, IMPATT diode, TUNNETT diode, TRAPATT diode, VARIT diode and LSA diode may be used for the microwave transmitter 11. Concerning the output of the microwave transmitter 11, microwaves are transmitted only in the guide member 15, it is not necessary to use a microwave transmitter of high output.

On the other hand, the microwave receiver 12 is a unit for receiving microwaves transmitted by the microwave transmitter 11. A microwave receiver of the prior design represented by the mixer diode (varistor) is used for the microwave receiver 12. Concerning the characteristic of the microwave receiver 12, it is not necessary for the microwave receiver 12 to have a particularly low noise index.

The circuit elements 13 include electronic parts such as transistors and resistors, switches, various adjusting knobs, terminals and indicating lamps. These circuit elements 13 drive and control the microwave transmitter 11 and the microwave receiver 12. These circuit elements 13 are assembled onto a circuit base board 17 and accommodated in the enclosure 14. Through a cable 18, these circuit elements 13 are connected with a power source and units arranged outside the enclosure 14 which are not shown in the drawing. The enclosure 14 is a hollow container made of metal. A flange 20 is provided on a joint surface 19 of the enclosure 14 on which the enclosure 14 and the attaching member 16 are joined. A surface of the enclosure 14 opposed to the joint surface 19 is closed by a cover member 21. On the joint surface 19, there are provided openings 22a and 22b. The microwave transmitter 11 and the microwave receiver 12 are respectively provided in the openings 22a and 22b. Above the microwave transmitter 11 and the microwave receiver 12, there are provided a circuit base board 17 on which various circuit elements 13 are assembled.

In this connection, the microwave transmitter 11, microwave receiver 12 and various circuit elements 13 can be variably arranged in accordance with the number of parts and the shape of the enclosure 14. For example, the units described above may be assembled on the same base board.

The guide member 15 is provided to guide microwaves transmitted by the microwave transmitter 11 to the microwave receiver 12. The guide member 15 is formed in such a manner that a hollow tube-shaped body made of corrosion resistant metal is bent to a U-shape. Microwaves transmitted from the microwave transmitter 11 go through one straight portion 15a of the guide member 15. While the microwaves reflect on the inner wall surface of a curved portion 15b, they advance to the other straight portion 15c and go through it. Finally, the microwaves reaches the microwave receiver 12.

A number of liquid introducing holes 23 are formed in the curved portion 15b of the guide member 15. Accordingly, when a liquid level reaches the curved portion 15c, liquid enters inside the curved portion 15b. The diameter and number of these liquid introducing holes 23 are no particularly limited, however, when the diameter is too small, it is impossible for the liquid to get into the curved portion 15b of the guide member 15. On the other hand, when the diameter is too large, the microwaves get out from the curved portion 15b through the liquid introducing holes 23, and there is a possibility that the microwaves are not guided to the microwave receiver 12. Therefore, the diameter of the liquid introducing hole 23 is appropriately determined in accordance with the type of liquid and the length of the curved portion 15b.

The enclosure 14 and the guide member 15 are connected with each other by the attaching member 16 and attached to the container 1.

The attaching member 16 is composed of a flat plate made of metal. On the attaching member 16, there are provided openings 24a, 24b corresponding to the openings 22a, 22b formed on the enclosure 14. When the enclosure 14 is joined to the attaching member 16, through-holes 25a, 25b are composed, penetrating through both enclosure 14 and the attaching member 16. The enclosure 14 is fixed to the attaching member 16 in such a manner that a flange 20 of the enclosure 14 is screwed to the attaching member 16 with bolts 26.

In the attaching member 16, there are provided connecting portions 27a, 27b, which protrude onto the container 1 side, at the positions where the openings 24a, 24b are formed, wherein the connecting portions 27a, 27b are formed by means of welding or integral forming. The straight portions 15a, 15c of the guide member 15 are connected with end portions of the connecting portions 27a, 27b. Outer circumferential surfaces of the connecting portions 27a, 27b are threaded. Inner circumferential surfaces of the joints 28a, 28b are also threaded. Therefore, the connecting portions 27a, 27b are engaged with the straight portions 15a, 15b of the guide member 15 through the joints 28a, 28b. In this way, the guide member 15 is attached to the attaching member 16.

The openings 24a, 24b of the attaching member 16, and the openings 22a, 22b of the enclosure 14 are tightly closed by seal members 29 made of microwave transmitting substance. The seal member 29 may be formed in such a manner that the microwave transmitting substance is machined to a plug-shaped member, which may be engaged with the opening, or alternatively the microwave transmitting substance in a molten condition is poured into the opening and solidified.

In the case where the stored liquid is a highly volatile liquid such as LPG, LNG or alcohol, it is possible for the seal members 29 to prevent gas of the highly volatile liquid from getting into the liquid introducing holes 23 of the guide member 15 and the connecting portion between the guide member 15 and the attaching member 16. Therefore, it is possible to prevent the gas from diffusing inside the enclosure 14 through the through-holes 25a, 25b. In case of a fire caused by an electrical short circuit inside the enclosure 14, it is possible to prevent catching fire and explosion by the foregoing construction. At the same time, it is possible to prevent a fire caused inside the enclosure 14 from spreading into the container 1.

On the joined surface 19 of the enclosure 14, there are provided openings 30 which connect the openings 22a, 22b with the atmosphere. For example, these openings 30 may be formed in such a manner that grooves of an appropriate depth are formed on the joined surface 19 of the enclosure 14 in a region from the openings 22a, 22b to an outer periphery of the flange 20. Due to the foregoing, in case of damage of the seal member 29, it is possible to prevent the volatile components of storage liquid from diffusing inside the enclosure 14, and it is also possible to prevent a fire caused inside the enclosure 14 from spreading into the container 1.

In this connection, the openings 30 are not necessarily formed on the joined surface 19. Although not shown in the drawings, the same openings may be formed in the attaching member 16 or the enclosure 14 so that the openings 24a, 24b can be connected with the atmosphere through the openings 30. Further, the openings 30 may be formed in both the enclosure 14 and the attaching member 16.

After the enclosure 14 and the guide member 15 have been attached to the attaching member 16, it is screwed using bolts 31 to an opening of the container 1 to which the level gauge is attached.

Next, with reference to the same drawing, the liquid level detection principle effected by the level gauge 10 will be explained as follows.

As described above, microwaves are transmitted through air, ceramics, synthetic resin and glass. However, microwaves are absorbed by liquid. Accordingly, when the liquid level in the storage container 1 is lower than the guide member 15 (shown by character L1), microwaves transmitted from the microwave transmitter 11 are transmitted in the guide member 15 as indicated by character M and guided to the microwave receiver 12.

When the liquid level rises and reaches a portion of the curved portion 15b of the guide member 15 (shown by character L2), liquid gets into the curve portion 15b from the liquid introducing hole 23 and stays in the bottom of the curved portion 15b. However, even in this condition, a cavity portion exists inside the curved portion 15b. Accordingly, a portion of the microwave is absorbed by the liquid staying in the curved portion 15b, however, the rest of the microwave is transmitted through this cavity portion and reaches the microwave receiver 12.

However, when the liquid level further rises and the entire curved portion 15b of the guide member 15 is dipped in the liquid (shown by character L3), the liquid gets into the curved portion 15b from the liquid introducing hole 23, so that the inside of the curved portion 15b is filled with the liquid and the transmission space of microwaves is completely blocked. In this way, the microwaves are intercepted, and it is impossible for the microwaves to reach the microwave receiver 12. When the circuit is composed in such a manner that an interruption signal is outputted from the microwave receiver 12 at this time, it is possible to detect the liquid level.

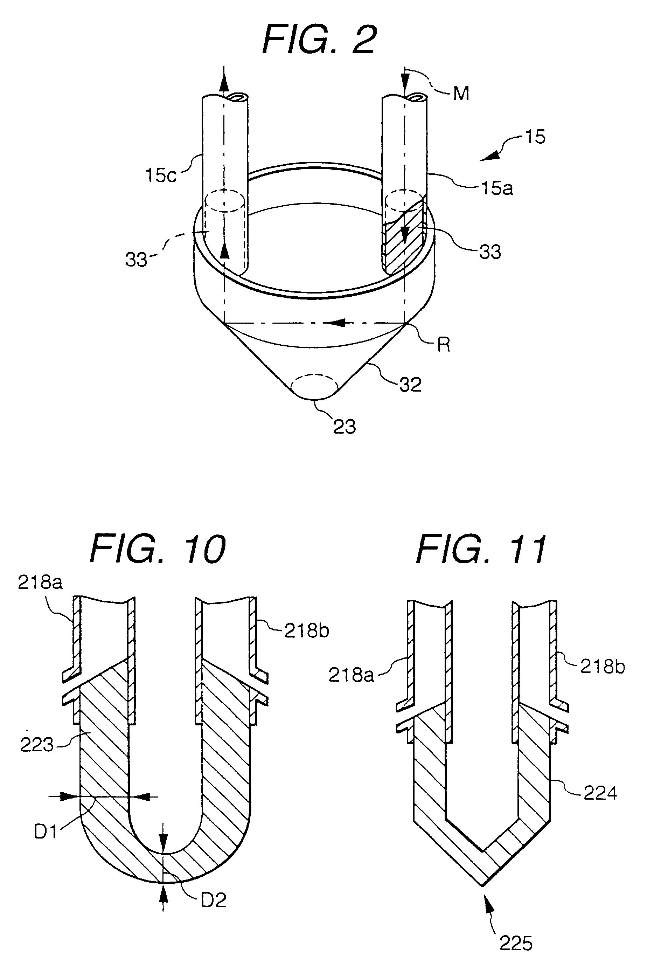

Since the liquid level is detected when the transmission of microwaves is intercepted, a storage amount of liquid can be set at an arbitrary value by changing the length of the straight portion 15a (15c) of the guide member 15. On the other hand, in the case where the apparatus is attached onto the side wall of the container, of course, it is not necessary to change the length of the guide member 15. Fig. 2 is a view showing an example in which the structure of the liquid introducing portion of the guide member 15 is changed. As illustrated in the drawing, a top of the curved portion 15b may be composed of a conical reflecting member 32 having a liquid introducing hole 23. As shown by character M, after microwaves have been sent out from the straight portion 15a, they are reflected on the conical surface of the reflecting member 32 and guided to the straight portion 15c.

Liquid gets into the cone from the liquid introducing hole 23 provided at the top of the reflecting member 32. When the liquid level reaches a position higher than the reflecting position R of the reflecting member 31, the transmission of microwaves is intercepted.

Due to the foregoing structure of the guide member 15, as long as the reflection of microwaves is not affected by the liquid introducing hole 23, the diameter of the liquid introducing hole 23 can be extended. (Theoretically, the diameter of the liquid introducing hole 23 can be extended to a diameter of the cone at the reflecting position R where microwaves are reflected.) Therefore, this structure may be adapted to a highly viscous liquid.

As long as the reflecting member 32 can guide the microwaves sent out from one straight portion 15a of the guide member 15 to the other straight portion 15c, a shape of the reflecting member 32 is not limited to a cone, but various shapes may be employed. For example, instead of the conical reflecting member, a V-shaped member may be connected with the ends of the straight portions 15a, 15c of the guide member 15.

When plug members 33 made of a microwave transmitting substance are provided at the connecting portions between the straight portions 15a, 15c of the guide member 15 and the reflecting member 32 or at the connecting portions between the straight portions 15a, 15c of the guide member 15 and the curved portion 15b (shown in Fig. 1), liquid getting into the straight portions is stopped by the plug members 33, so that the pollution on the inner walls of the straight portions 15a, 15c can be prevented, and the guide members are not stopped up even a highly viscous liquid is used.

Further, the level gauge 10 may be attached not only on the ceiling surface of the container 1 but also on the side of the container 1. When the level gauge 10 is attached on the side of the container 1, the liquid level can be detected in the same manner.

In the above level gauge various structures may be adopted. By way of example, a specific structure is shown in the following example useful in understanding the present invention.

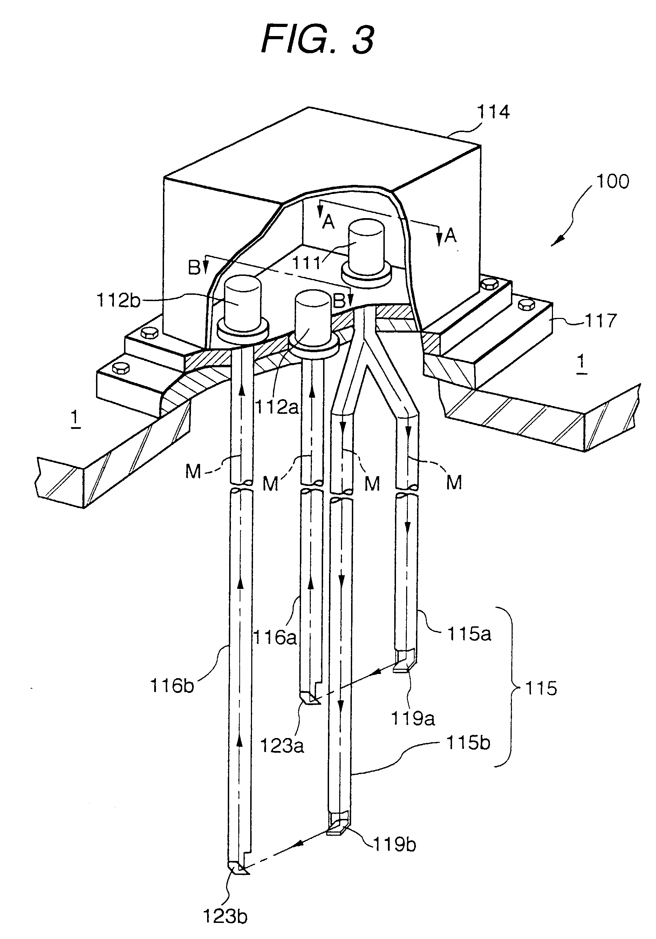

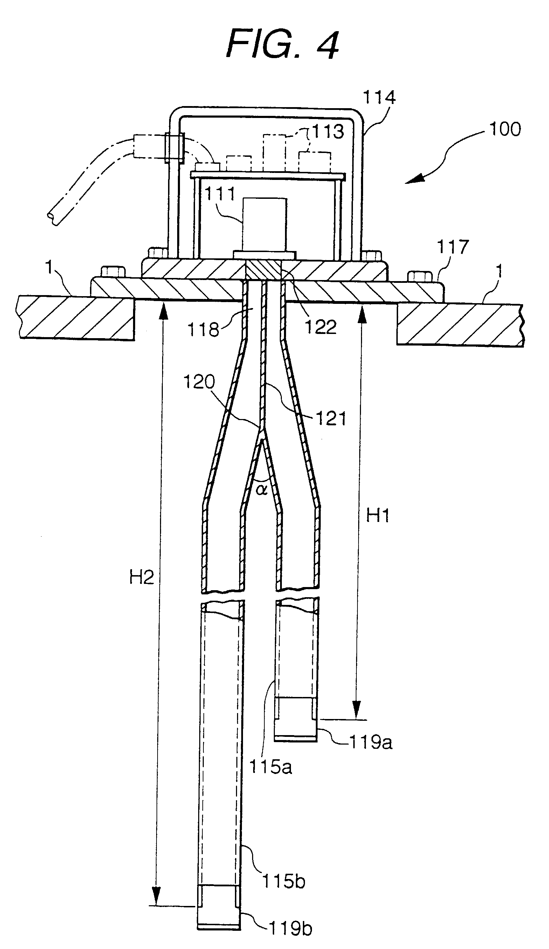

As shown in Fig. 3, the level meter 100 includes: an enclosure 114 accommodating a microwave transmitter 111, microwave receivers 112a, 112b and various circuit components 113 (shown in Fig. 4); a transmitter side guide member 115 for guiding microwaves sent out from the microwave transmitter 111; and receiver side guide members 116a, 116b for guiding the microwaves transmitted through the transmitter side guide member 115 to the microwave receivers 112a, 112b.

The level gauge 100 is attached to the container 1 through an attaching member 117 under the condition that the enclosure 114, transmitter side guide member 115 and microwave receivers 112a, 112b are connected with the attaching member 117.

Microwaves sent out from the microwave transmitter 111 are guided to the transmitter side guide member 115 that is continuously provided onto the wave transmitting surface of the microwave transmitter 111.

The transmitter side guide member 115 is a hollow member made of corrosion resistant metal, and microwaves are transmitted while they are reflected on the inner wall surface of the transmitter side guide member 115.

As illustrated in Fig. 4, the transmitter side guide member 115 includes: a microwave introducing portion 118 connected with the microwave transmitting portion of the microwave transmitter 111; a first guide 115a branching off from the microwave introducing portion 118; and a second guide 115b.

Lengths of the protruding portions of the first and second guide members 115a, 115b onto the container 1 side are determined in accordance with the height of the liquid level in the container 1 corresponding to the setting storage volume of liquid. Accordingly, as illustrated in Fig. 4, the transmitter side guide member 115 includes: a single microwave introducing portion 118; a first guide portion 115a having a short protruding length (H1) corresponding to a large volume of stored liquid (high liquid level); and a second guide portion 115b having a long protruding length (H2) corresponding to a small volume of stored liquid (low liquid level).

End portions on the protruding sides of the first and second guides 115a, 115b are open. The end portions are respectively provided with reflecting faces 119a, 119b inclined by an inclination angle 45°.

As illustrated in Fig. 4, the inside of the microwave introducing portion 118 is divided into two equal parts, the sections of which are semicircular, by a bulkhead 121 which extends to a branch point 120 of the first guide 115a and the second guide 115b.

The transmitter side guide member 115 composed in the above manner is arranged in such a manner that an opening of the microwave introducing portion 118 is opposed to the wave transmitting portion of the microwave transmitter 111 through a seal member 122 made of a microwave transmitting substance.

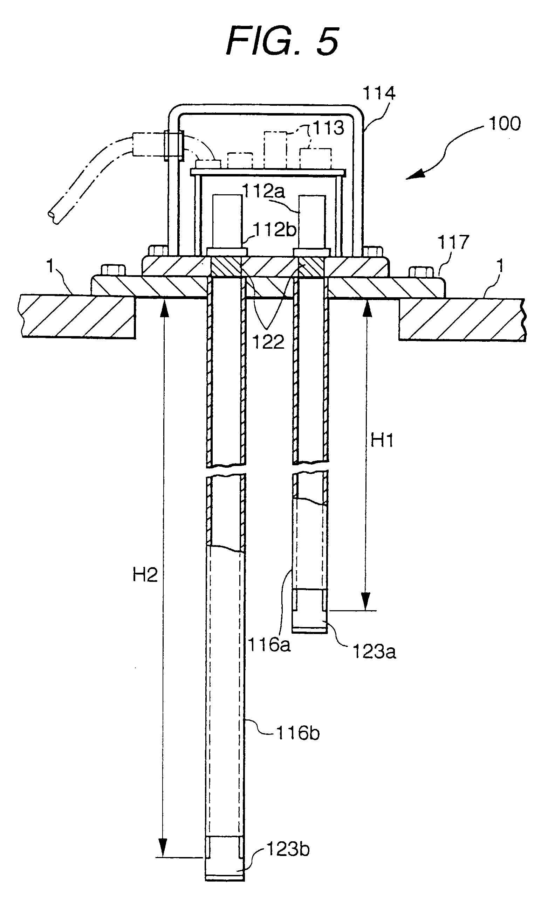

On the other hand, as illustrated in Fig. 5, the receiver side guide members 116a, 116b are attached to the microwave receivers 112a, 112b in such a manner that the receiver side guide members 116a, 116b are opposed to the wave receiving portions of the microwave receivers 112a, 112b through seal members 122 made of a microwave transmitting substance.

The wave receiver side guide members 116a, 116b are composed of hollow straight pipes made of corrosion-resistant metal. As illustrated in Fig. 5, the protruding length of the receiver side guide member 116a on one side is the same as the protruding length (H1) of the first guide portion 115a composing the transmitter side guide member 115. The protruding length of the receiver side guide member 116b on the other side is the same as the protruding length (H2) of the second guide portion 115b composing the transmitter side guide member 115.

In the following explanations, the receiver side guide member 116a is referred to as a first receiver side guide member, and the receiver side guide member 116b is referred to as a second receiver side guide member.

End portions on the protruding sides of the receiver side guide members 116a, 116b are open. The end portions are respectively provided with reflecting faces 123a, 123b inclined by an inclination angle 45°.

The transmitter side guide member 115, the first receiver side guide member 116a and the second receiver side guide member 116b are attached to the attaching member 117 in the following manner. The reflecting face 119a of the first guide 115a of the transmitter side guide member 115 is opposed to the reflecting face 123a of the first receiver side guide member 116a, and the reflecting face 119b of the second guide 115b of the transmitter side guide member 115 is opposed to the reflecting face 123b of the second receiver side guide member 116b.

Accordingly, as shown by character M, the microwaves sent out from the microwave transmitter 111 are approximately equally divided by the bulkhead 121 of the transmitter side guide member 115 to the first guide 115a side and the second guide 115b side. Then the microwaves are transmitted through the respective guides 115a, 115b, and reflected by the reflecting faces 119a, 119b, so that the microwaves are guided outside. After that, the microwaves are reflected on the reflecting faces 123a, 123b, so that the microwaves are introduced into the first and second receiver side guide members 116a, 116b and then guided into the microwave receivers 112a, 112b.

In this connection, the smaller the branch angle a (shown in Fig. 4) between the first and second guides 115a, 115b is, the more advantageously the microwaves M are distributed and transmitted.

The level gauge 100 is composed as described above and attached to the container 1 through the attaching member 117.

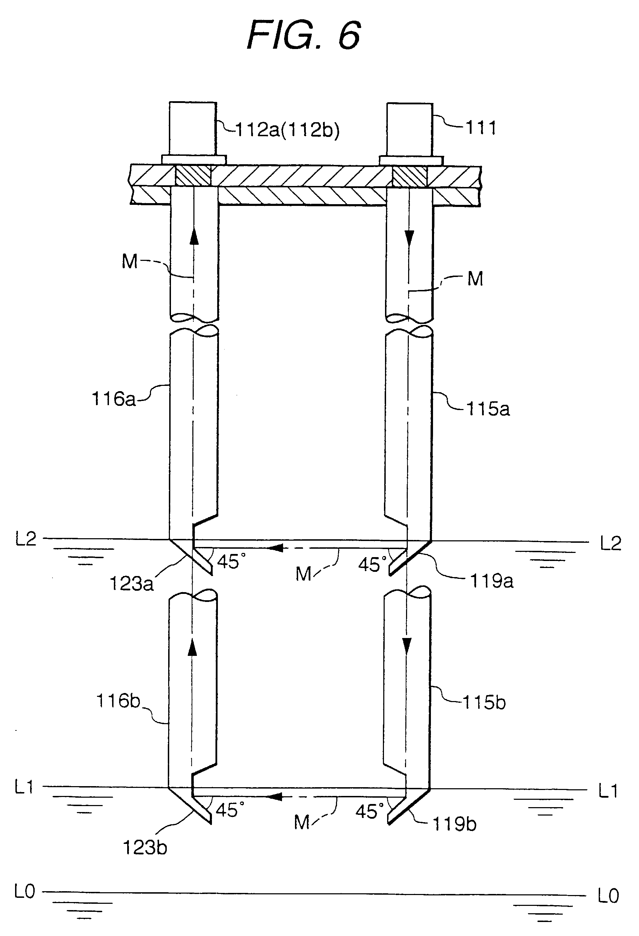

Next, with reference to Fig. 6, the principle of detecting a liquid level by the level gauge 100 will be explained below.

When a liquid level in the container 1 is lower than both the reflecting face 119b of the first guide 115a of the transmitter side guide member 115 and the reflecting face 123b of the second receiver side guide member 116 (shown by character L0), as shown by character M, the microwaves sent out from the microwave transmitter 111 are guided to both the first receiver side guide member 116a and the second receiver side guide member 116b, and further guided to the microwave receivers 112a, 112b connected with the ends of the guide members 116a, 116b.

However, when the liquid level rises to a level (character L1) at which the reflecting face 119b of the second guide 115b of the transmitter side guide member 115 and the reflecting face 123b of the second receiver side guide member 116b are entirely covered with the liquid, the microwaves introduced out from the reflecting face 119b of the second guide 115b are intercepted by the liquid, so that the microwaves can not be transmitted to the reflecting face 123b of the second receiver side guide member 116b. Accordingly, it is impossible for the microwaves to reach the microwave receiver 112b.

When the circuit is composed in such a manner that an interruption signal is outputted from the microwave receiver 112b at this time, it is possible to detect the first liquid level (L1).

When the liquid level rises to a level (character L2) at which the reflecting face 119a of the first guide 115a of the transmitter side guide member 115 and the reflecting face 123a of the first receiver side guide member 116a are entirely covered with the liquid, the microwaves introduced out from the reflecting face 119a of the first guide 115a are intercepted by the liquid, so that the microwaves can not be transmitted to the reflecting face 123a of the first receiver side guide member 116a. Accordingly, it is impossible for the microwaves to reach the microwave receiver 112a.

When the circuit is composed in such a manner that an interruption signal is outputted from the microwave receiver 112a at this time, it is possible to detect the second liquid level (L2).

When the liquid level is detected when the transmission of microwaves is intercepted as described above, when the protruding lengths (H1, H2) of the first and second guides 115a, 115b of the transmitter side guide member 115 are changed and also when the protruding lengths of the first and second receiver side guide members 116a, 116b are changed, it is possible to arbitrarily set the storage volume of liquid at two levels.

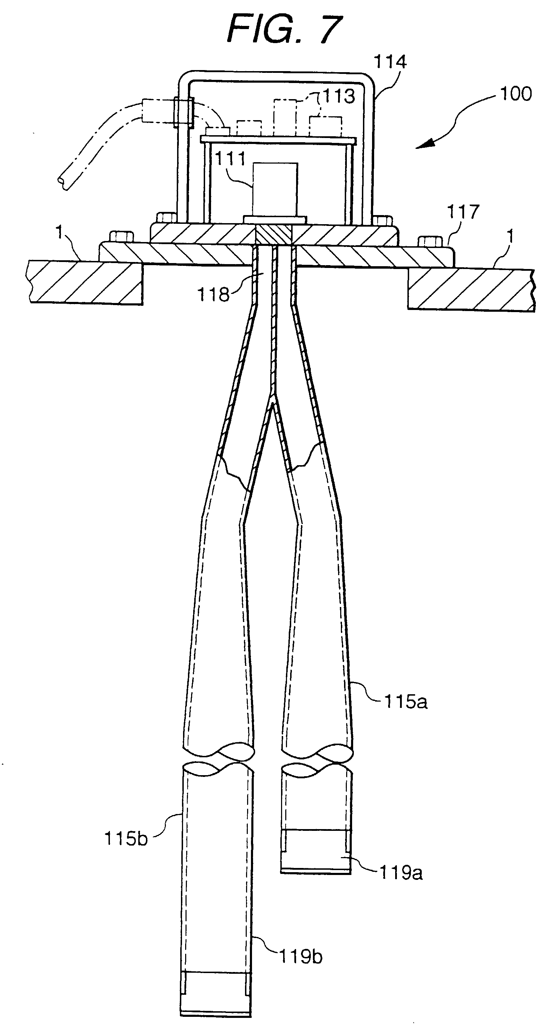

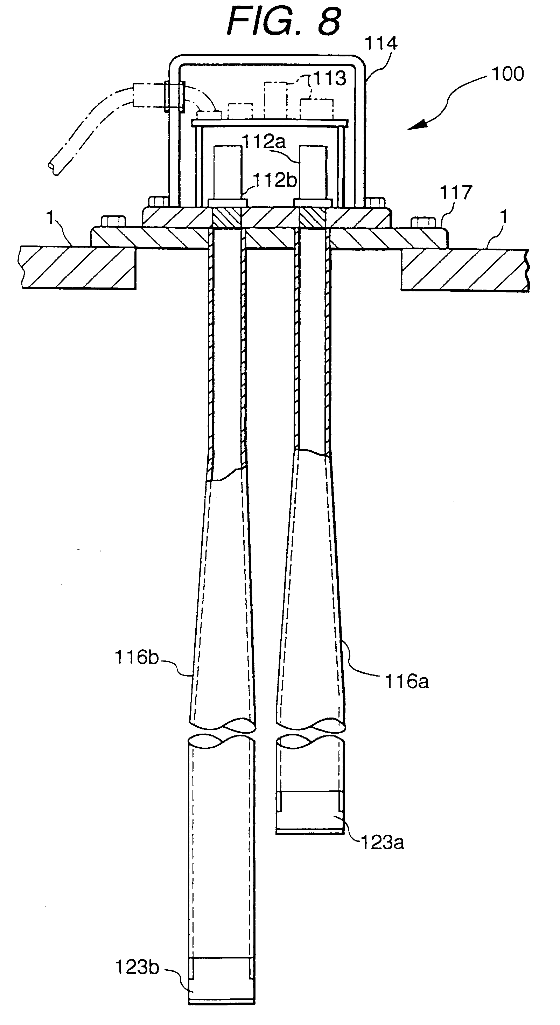

The guide member of the level gauge 100 can be changed as shown in Figs. 7 and 8. When microwaves are normally transmitted in a hollow pipe, the optimum transmission diameter is in existence, which is the optimum inner diameter of the hollow pipe for transmitting microwaves. The optimum transmission diameter depends on the frequency of microwaves, for example, in the case of the microwaves of X-band, which is the most typical microwaves, the frequency is 10.525 GHz and the optimum transmission diameter is 19 to 27.6 mm.

The longer the distance is from the wave transmitting portion of the microwave transmitter 111, the more influence is exerted upon the transmission of microwaves. In order to reduce the size of the entire level gauge 100 and the consumption of electric power, it is preferable that an area of the wave transmitting portion of the microwave transmitter 111 is as small as possible. Since the microwave introducing portion 118 of the transmitter side guide member 115 is composed of a single body, it is not preferable that the transmitter side guide member 115 is composed of the optimum transmission diameter over the entire length.

From the above viewpoint, it is possible to transmit microwaves in a good condition when the transmitter side guide member 115 is composed in the following manner as shown in Fig. 7. The microwave introducing portion 118 has a small diameter corresponding to the area of the wave transmitting portion of the microwave transmitter 111. Diameters of the first and second guides 115a, 115b, which branch from the microwave introducing portion 118, are gradually increased as it comes to the end, that is, the first and second guides 115a, 115b are tapered, so that the transmission diameters are finally increased.

Ends of the first and second guides 115a, 115b are open, and the reflecting faces 119a, 119b are formed at both ends.

On the other hand, as shown in Fig. 8, the protruding lengths of the first and second receiver side guide members 116a, 116b correspond to the first and second guides 115a, 115b of the transmitter side guide member 115. The first and second receiver side guide members 116a, 116b are formed to be tapered so that the diameters of the protruding ends can be the optimum transmission diameters. Ends of the first and second receiver side guide members 116a, 116b are respectively open, and the reflecting faces 123a, 123b are formed at the ends.

The transmitter side guide member 115, the first receiver side guide member 116a and the second receiver side guide member 116b are attached to the attaching member 117 as shown in Fig. 3 in the following manner. The reflecting face 119a of the first guide 115a of the transmitter side guide member 115 is opposed to the reflecting face 123a of the first receiver side guide member 116a, and the reflecting face 119b of the second guide 115b of the transmitter side guide member 115 is opposed to the reflecting face 123b of the second receiver side guide member 116b.

Detection of the liquid level is effected in accordance with the detection principle explained before with reference to Fig. 6. Since the diameters of the transmitter side guide member 115 and the first and second receiver side guide members 116a, 116b are large in this case, areas of the openings including the reflecting faces of the end portions are increased. Due to the foregoing, it is possible to avoid the stoppage of each guide member caused by the liquid to be detected. Therefore, the level gauge can be preferably used even in the case of a highly viscous liquid such as crude oil.

In the above explanations, the example is shown, in which the transmitter side guide member 115 protrudes onto the container 1 side and branches to the first and second guides 115a, 115b, the protruding lengths of which are different from each other, so that two levels can be detected. However, as long as the microwaves can be transmitted, it is possible to compose the guide in such a manner that the transmitter side guide member 115 is divided into much more branches, the protruding lengths of which are different from each other. In this case, a plurality of receiver side guide members are provided in accordance with the transmitter side guide member 115. Due to the foregoing structure, it is possible to detect much more liquid levels.

In the following a preferred embodiment of the present invention is explained in detail.

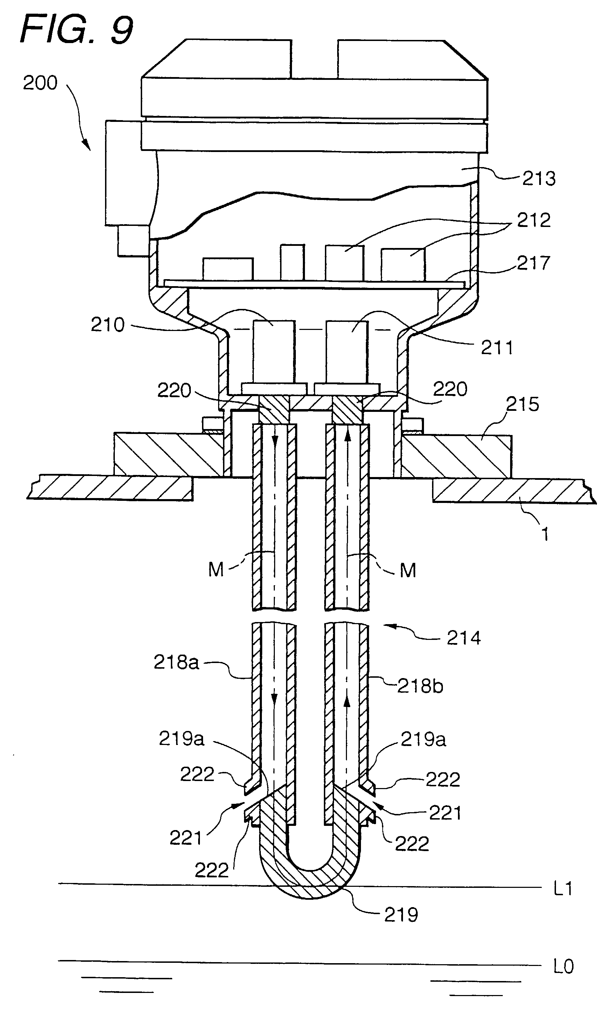

As shown in Fig. 9, the level meter 200 includes: an enclosure 213 accommodating a microwave transmitter 210, microwave receiver 211 and various circuit components 212; a guide member 214 for guiding microwaves; and an attaching member 216 through which the enclosure 213 and the guide member 214 are connected and attached to a storage container 1.

The guide member 214 is provided so as to guide the microwaves sent out from the microwave transmitter 210 to the microwave receiver 211. The guide member 214 includes: a transmitter side wave guide 218a connected with the microwave transmitter 210; a receiver side wave guide 218b connected with the microwave receiver 211; and a guide body 219 composed of a solid dielectric body, wherein the transmitter side wave guide 218a and the receiver side wave guide 218b are connected with each other by the guide body 219.

The wave guides 218a, 218b are hollow pipes made of corrosion resistant metal. The wave guides 218a, 218b are respectively connected with the microwave transmitter 210 and the microwave receiver 211 through plug members 220 made of microwave transmitting material.

It is preferable that the dielectric constant of material of the guide body 219 is low, because a range of the dielectric constant of the body capable of being detected is extended. Also, it is preferable that the chemical-resistant and thermal-resistant properties of the guide body 219 are high. The guide body 19 is formed in such a manner that the material of a low dielectric constant is curved to be a substantial U-shape.

The guide member 214 is composed when both ends 219a of the guide body 219 are engaged and connected with the ends of the transmitter side wave guide 218a and receiver side wave guide 218b.

Accordingly, microwaves transmitted from the microwave transmitter 210 advance as shown by character M in the drawing while they are reflected on the inner wall surface of the transmitter side wave guide 218a. Next, the microwaves are incident upon the guide body 219 and pass through the U-shaped curved portion. Then the microwaves are transmitted through the receiver side wave guide 218b and reach the wave receiving portion of the microwave receiver 211. When both ends 219a of the guide body 219 are inclined downward in the drawing, the microwaves are not diffused when they are incident upon and emergent from the guide body 219, so that the attenuation of microwaves can be prevented.

When through-holes 221 continuous to the inclined faces of both ends 219a of the guide body 219 are formed at the joint portions between the wave guides 218a, 218b and the guide body 219, drops of water caused by dew condensation in the wave guides 218a, 218b are discharged outside the guide member 214. Therefore, it is possible to prevent the drops of water from staying at the ends 219a of the guide body 219 and intercepting the transmission of microwaves.

It is necessary that the diameter of the through-hole 221 is not more than the leakage diameter of microwaves. For example, in the case of commonly used microwaves in the X-band, the leakage diameter of microwaves is approximately 15 mm. Therefore, it is preferable that the diameter is set to be smaller than that. In the case where the diameter of the through-hole 221 is required to be larger than the microwave leakage diameter, leakage of the microwaves can be prevented by substantially reducing the diameter of the through-hole 221 when a frame 222 is attached to the circumference of the through-hole 221.

Next, referring to the drawing, the principle of level detection effected by the above level gauge 200 in the container 1 will be explained below.

Level detection is effected by the level gauge 200 of this embodiment according to the principle described below. In the case where microwaves are transmitted through a transmission medium composed of a dielectric body, an amount of microwave transmission (microwave intensity) is lowered when the microwaves come into contact with a substance, the dielectric constant of which is different.

In the case where a level of the body to be detected stored in the container 1 is lower than the guide body 219 (shown by character L0), microwaves sent out from the microwave transmitter 210 are guided to the microwave receiver 211 by the guide body 219, wherein an amount of transmission of microwaves is maintained constant. In this case, when the guide body 219 is composed of a low dielectric body, a range of the dielectric constant of the liquid to be detected is extended.

Consequently, the microwave receiver 211 continuously detects a predetermined intensity of microwaves.

However, when the liquid level rises and the guide body 219 comes into contact with the body to be detected or alternatively a portion of the guide body 219 is embedded in the body to be detected (character L1), an amount of transmission of microwaves transmitted in the guide body 219 is changed.

In the case where the dielectric body composing the guide body 219 is surrounded by air, immediately after microwaves that have been transmitted through the transmitter side wave guide 218a have been incident upon the guide body 219, they are transmitted through the guide body 219 without being attenuated. However, when the microwaves reaches a portion surrounded by the body to be detected, the dielectric constant of which is higher than that of air, the microwaves are diffused onto the liquid side. Accordingly, an amount of transmission of microwaves guided into the microwave receiver 211 is reduced, so that a detection intensity of the microwave receiver 211 is lowered.

Consequently, it is possible to detect the liquid level by a detection circuit composed in such a manner that a detection signal is outputted from the microwave receiver 211 when a detection intensity of the microwave receiver 211 is changed.

In this case, detection is effected by a difference of the dielectric constant between air and the body to be detected. Accordingly, the body to be detected is not limited to liquid. Not only liquid but also granules can be detected.

In this case, when material of a low dielectric constant is used as a dielectric body composing the guide body 219, it is possible to extend a range of the body to be detected.

When the lengths of the wave guides 218a, 218b of the guide member 214 are changed, it is possible to arbitrarily set a storage volume.

In this connection, when the guide body 219 is composed of a dielectric rod, the diameter of which is constant, in the case where the dielectric constant of the body to be detected is close to that of air, an amount of diffusion of microwaves is reduced when the guide body 219 is surrounded by the body to be detected. In accordance with the reduction of the amount of diffusion of microwaves, an amount of change in the receiving intensity of the microwave receiver 211 is also reduced, and the detection accuracy is lowered.

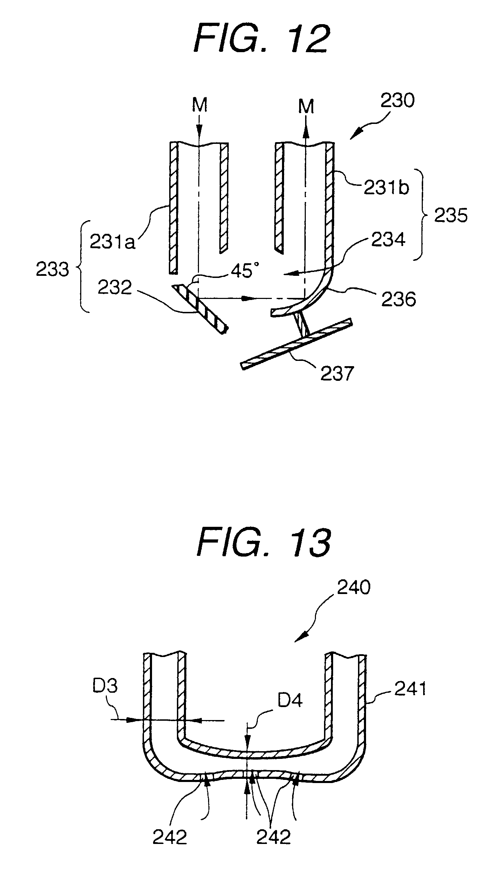

Generally, in the case where microwaves are transmitted in a dielectric body, an amount of attenuation of microwaves is increased when a sectional area of the dielectric body is small. In view of the above circumstances, the guide body 219 is composed as shown in Fig. 10 in the present invention. That is, the U-shaped curved portion of the guide body 223 is composed in the following manner. The diameter of the U-shaped curved portion of the guide body 223 with which the wave guides 218a, 218b are connected is made to be a large diameter (D1), and the diameter of the center of the U-shaped curved portion is made to be a minimum diameter (D2), wherein the diameter of the U-shaped curved portion is gradually reduced.

Due to the foregoing structure, a certain amount of microwaves are attenuated in the U-shaped curved portion of the guide body 223, and even in a condition in which the guide body 223 is surrounded by a substance of a low dielectric constant so that a minute amount of microwaves are diffused, a change in the microwave receiving intensity of the microwave receiver is increased, and even the low dielectric constant substance can be positively detected.

The same effect as that of the guide body 219, the diameter of which is gradually reduced as described above, can be provided by the guide body 224 shown in Fig. 11 which has a curved portion of an acute angle. In this case, microwaves leak from an acute angle portion 225 of the guide body 224 to the body to be detected.

In this connection, the guide body 224 may be composed in such a manner that the diameter is gradually reduced toward the acute angle portion 225.

Further, the structure of the guide member 214 may be changed as shown in Fig. 12. As illustrated in the drawing, the guide member 230 includes: a transmitter side guide portion 233, a reflecting member 232 composed of a dielectric substance is provided at the lower end portion of a transmitter side wave guide 231a and a receiver side guide portion 235, the opening 234 of which is provided at the lower end portion of the receiver side wave guide 231b.

The reflecting member 232 is attached at a position immediately below the lower end opening of the transmitter side wave guide 231a, wherein the reflecting member 232 forms an angle 45° with respect to the advance axis M of microwaves.

The opening 234 is formed from a lower extending portion 236 which is curved and extended from a lower end of the receiver side wave guide 231b toward the reflecting member 232.

The reflecting member 232 and the opening 234 are opposed to each other at a predetermined interval.

As shown by character M in the drawing, microwaves sent out from the microwave transmitter not shown in the drawing are guided out from a lower end of the transmitter side wave guide 231a. Then the microwaves are reflected on the reflecting member 232 arranged at a lower position of the transmitter side wave guide 231a and guided into the opening 234 of the receiver side wave guide 231b. After that, the microwaves are guided to the microwave receiver not shown in the drawing.

The storage level of the body to be detected in the container is detected when the reflecting member 232 of the guide member 230 and the opening 234 are surrounded by the body to be detected.

When the dielectric constant of the body to be detected is approximate to that of the dielectric body composing the reflecting member 232, a region including the reflecting member 232 is put in a condition in which the dielectric constant is substantially uniform. For this reason, the reflecting member 232 loses a reflecting function with respect to the microwaves. Due to the foregoing, the microwaves are not reflected on the reflecting member 232, and most microwaves are transmitted through the reflecting member 232 and advance straight downward in the drawing.

As a result, no microwaves are guided to the opening 234, so that the microwave receiving intensity decreases sharply in the microwave receiver. By this change in the receiving intensity, the storage level of the body to be detected in the container can be detected.

On the other hand, in the case where the dielectric constant of the body to be detected is higher than that of the dielectric body composing the reflecting member 232, the transmission of microwaves to the opening 234 is intercepted by the body to be detected. Therefore, the receiving intensity of microwaves in the microwave receiver decreases sharply. Accordingly, the storage level in the container can be detected by this change in the receiving intensity.

In the above arrangement of the guide member 230, after microwaves have been transmitted through the reflecting member 232, a portion of the microwaves, which have reflected on a bottom or wall of the storage container, enter into the opening 234 and generate noise in some cases. In order to prevent the influence of noise, a shielding member 237, for example, made of metal through which microwaves are not transmitted may be arranged under the lower extending portion 236 of the receiver side wave guide 231b. By this shielding member 237, the reflected microwaves are intercepted.

Further, it is possible to change the structure of the guide member 214 as shown in Fig. 13. As shown in the drawing, the guide member 240 includes a substantially U-shaped wave guide 241 connecting the microwave transmitter not shown in the drawing with the microwave receiver.

In this case, the curved portion is composed in the following manner. The diameter (D3) of the wave guide 241 is the same as the diameter of a large diameter portion of the curved portion, and the center of the curved portion is formed to be a small diameter portion (D4), wherein the diameter is gradually reduced. In this case, in the curved portion, there are provided a plurality of through-holes 242 for introducing the body to be detected into the wave guide 241 and discharging it from the wave guide 241.

When microwaves are normally transmitted in a wave guide, a diameter of the wave guide in which microwaves are capable of being transmitted is in existence corresponding to the frequency of microwaves. The diameter of the wave guide in which microwaves are capable of being transmitted changes in accordance with the dielectric constant of an object filled in the wave guide. Specifically, the following equation is satisfied.

$$d = 175.70/f(e)^{1/2}$$

where the wave guide diameter is d (mm), the dielectric constant of the object filled in the wave guide is e, and the frequency of microwaves is f (GHz).

That is, when the frequency f of microwaves is constant, the higher the dielectric constant e of a substance, the smaller the diameter of a wave guide in which microwaves are capable of being transmitted.

Consequently, when the diameter of the small diameter portion (D4) of the curved potion of the wave guide 241 composing the guide member 240 is made to be smaller than the diameter in which microwaves are capable of being transmitted in air, in the case where a substance of which the dielectric constant is higher than that of air gets into the wave guide 241 through the through-holes 242 so that the wave guide is filled with the substance, it becomes possible for the microwaves to be transmitted through the wave guide, and the microwaves are received by the microwave receiver not shown in the drawing. Accordingly, the storage level is detected by the reception of microwaves effected by the microwave receiver.

Commonly, the dielectric constant of the body to be detected is higher than that of air. Therefore, it is possible to detect a storage level of a substance in a wider range. Especially, it is possible to detect a storage level of a dielectric body of which the dielectric constant is low, wherein the detection used to be difficult according to the prior art. It is possible to select a substance capable of being detected according to the setting value of the pipe diameter in which microwaves are capable of being transmitted.

As described above, the level gauge of the present invention is capable of positively, accurately detecting a storage level of the body to be detected, irrespective of the dielectric constant of the body to be detected, even when the object to be detected is granules. Further, it is not necessary to provide a transmitter of high output, and it is possible to reduce the areas of the transmitting and receiving sections. Furthermore, safety of the level gauge of the present invention is high and maintenance is easily effected, and the working efficiency is high.

## Claims

1. A level gauge comprising:

    a microwave transmitter (210);

    a microwave receiver (211);

    a storage container (1) for storing a body to be detected;

    a guide member (214) for introducing microwaves sent out from the microwave transmitter (210) to the microwave receiver (211); and

    the level gauge being attached to the storage container, the guide member (214) protruding into the container, and the guide member being composed of a guide body (219,223,224) made of dielectric material which connects a transmitter side wave guide (218a) connected with the microwave receiver (210), with a receiver side wave guide (218b) connected with the microwave receiver (211).

2. The level gauge according to claim 1, wherein a sectional area of a portion of the guide body (223) is smaller than that of another portion.

3. The level gauge according to claim 1, wherein the guide body (224) comprises an acute angle curved portion (225).

4. The level gauge according to one of claims 1 to 3, wherein both end portions of the guide body (219,223,224) are inclined downward, and a through-hole (221) having a frame (222) continuous to the end of the guide body is formed in both of the transmitter side wave guide (218a) and the receiver side wave guide (218b).

5. The level gauge according to one of claims 1 to 4, wherein the dielectric body composing the guide (219,223,224) is a low dielectric body.

# FIG. 1

# FIG. 2

# FIG. 10

# FIG. 11

# FIG. 3

EP 0 833 134 A2

# FIG. 4

15

# FIG. 5

# FIG. 6

# FIG. 7

# FIG. 8

# FIG. 9

## FIG. 12

## FIG. 13

# FIG. 14

# FIG. 15